# EUROPÄISCHE PATENTSCHRIFT

(11) **EP 3 050 627 B1**
(45) Veröffentlichungstag und Bekanntmachung des Hinweises auf die Patenterteilung: **22.08.2018**
(21) Anmeldenummer: 15153430.2
(22) Anmeldetag: 02.02.2015
(51) Int. Cl.: B02C 15/00

(54) **Antriebsanordnung, Arbeitsmaschine mit mindestens einer solchen Antriebsanordnung sowie Verfahren zum Betreiben einer solchen Antriebsanordnung**
Drive arrangement, working machine having one or more of such drive arrangements and method for operating such a drive arrangement
Dispositif d'entraînement, machine de chantier avec un tel dispositif et méthode pour utiliser un tel dispositif

(43) Veröffentlichungstag der Anmeldung: 03.08.2016
(73) Patentinhaber: Flender GmbH, 46395 Bocholt (DE)
(72) Erfinder: Kube, Andreas, 52078 Aachen (DE)
(74) Vertreter: Maier, Daniel Oliver

(56) Entgegenhaltungen:
- EP-A1- 2 500 100
- WO-A1-2013/160220
- US-A1- 2003 230 655

## Beschreibung

Die vorliegende Erfindung betrifft eine Antriebsanordnung, insbesondere für eine Mühle, sowie ein Verfahren zum Betreiben einer Antriebsanordnung.

DE 202009016825 U1 (Gebr. Pfeiffer AG) 08.04.2010 beschreibt eine Wälzmühle, umfassend ein Gehäuse, einen Mahlteller mit Mahlbahn und auf der Mahlbahn abrollende Mahlwalzen, wobei die Mahlwalzen im laufenden Betrieb außer Eingriff bringbar sind. Die Wälzmühle umfasst außerdem wenigstens zwei Antriebe mit Motor und Getriebe, die den Mahlteller antreiben. Um die konstruktionsbedingten oder auch bewusst gewählten Unterschiede in den Eigenschaften der Antriebe, d.h. in den Eigenschaften der Elektromotoren und der Untersetzungsgetriebe, egalisieren zu können, ist wenigstens einem der Getriebe, vorzugsweise jedem Getriebe, eine Turbokupplung zugeordnet. Die Drehmomentkennlinie der Turbokupplungen ist so gewählt, dass die unterschiedlichen Eigenschaften der Antriebe ausgeglichen werden, so dass jeder Antrieb mit seiner Nennleistung den Mahlteller antreibt.

Aus der Druckschrift EP 2 500 100 A1 ist eine Antriebseinrichtung für eine Arbeitsmaschineneinrichtung bekannt, die eine Antriebsmittel, ein Pumpenverteilergetriebe, eine Hydraulikpumpe eine Strömungskupplung und eine Keilscheibe umfasst. Ferner weist die Antriebseinrichtung eine Schaltkupplung auf, die zwischen dem Pumpenverteilergetriebe und der Keilscheibe zwischengeschaltet ist. Die Strömungskupplung ist zwischen die Keilscheibe und die Schaltkupplung geschaltet.

WO 2013/0160220 A1 offenbart eine Antriebseinheit für einen Brecher zur Zerkleinerung von Schüttgut, der einen Antriebsmotor zum Antrieb einer Brecherwalze umfasst. Die Antriebseinheit weist ein Getriebe auf, das über eine Eingangswelle und eine Ausgangswelle mit dem Antriebsmotor bzw. der Brecherwalze verbunden ist. Zwischen dem Antriebsmotor und der Brecherwalze ist an einer Torsionswelle eine elastische Kupplung angeordnet. Ferner sind zwischen der elastischen Kupplung und dem Antriebsmotor ein Getriebe und eine Momentbegrenzungskupplung angeordnet. In einer Ausführungsform der Lösung nach WO 2013/0160220 A1 ist eine Schnelllösekupllung zwischen der Kupplung und der Brecherwalze angebracht, die dazu geeignet ist, die Übertragung von Drehmoment auf die Brecherwalze zu unterbrechen.

Eine Turbokupplung, auch unter der Bezeichnung "Strömungskupplung" bekannt, ist eine hydrodynamische Kupplung, bei der die Leistung im gesamten Betriebsbereich hydrodynamisch nach dem Föttinger-Prinzip übertragen wird.

Strömungskupplungen erhitzen sich im Betrieb, insbesondere bei Startvorgängen. Dabei kann es vorkommen, dass eine Temperaturreserve hin zu einer maximal zulässigen Temperatur der Strömungskupplung für einen, eventuell wiederholten, Startvorgang eines Antriebs zu gering ist, weil die Strömungskupplung aus einem vorherigen Betrieb des Antriebs noch erhitzt ist. Die Wärmeabfuhr von den Strömungskupplungen erfolgt in der Regel durch Konvektion an die Umgebungsluft. Beim Stillstand des Antriebs besteht lediglich freie Konvektion, und die Strömungskupplung benötigt sehr lange, unter Umständen mehrere Stunden, um abzukühlen, bevor ein Start des Antriebs, insbesondere ein Anlauf unter hoher Last, wieder möglich ist. Daraus resultierende Wartezeiten bedeuten einen Produktionsverlust und sind unerwünscht.

Eine Aufgabe der vorliegenden Erfindung ist es, ein verbessertes Verfahren zum Betreiben einer Antriebsanordnung anzugeben. Eine weitere Aufgabe besteht darin, eine entsprechende Arbeitsmaschine anzugeben.

Die Aufgabe hinsichtlich der Antriebsanordnung wird erfindungsgemäß durch ein Verfahren mit den in Anspruch 1 angegebenen Merkmalen gelöst. Ebenso wird die Aufgabenstellung durch eine Arbeitsmaschine gemäß Anspruch 4 gelöst. Die Antriebsanordnung gemäß dem Verfahren dient zum Antreiben einer Arbeitsmaschine. Die Antriebsanordnung umfasst einen Motor zum Erzeugen eines Drehmoments, vorzugsweise einen elektrischen Motor. Der Motor kann aber auch eine andere Kraftquelle nutzen, z.B. in Form eines Hydraulikmotors. Die Antriebsanordnung umfasst außerdem eine Übertragungsvorrichtung zum Übertragen des Drehmoments von dem Motor zu der Arbeitsmaschine. Die Übertragungsvorrichtung umfasst dabei eine Strömungskupplung. Die Übertragungsvorrichtung umfasst mindestens einen steuerbaren Drehmomentübertrager zur Steuerung der Drehmomentübertragung vom Motor zu der Arbeitsmaschine.

Eine Arbeitsmaschine ist eine angetriebene Maschine, die Energie in Form von mechanischer Arbeit aufnimmt. Sie ist das Gegenstück zu dem Motor, d.h. einem Antrieb, welcher mechanische Energie abgibt. Im Zusammenspiel mit dem durch den Motor bereitgestellten Antrieb kann die Arbeitsmaschine auch als Abtrieb bezeichnet werden. Die Arbeitsmaschine ist mit dem Motor über eine Übertragungsvorrichtung zum mechanischen Übertragen des Drehmoments von dem Motor zu der Arbeitsmaschine verbunden. Vorzugsweise ist dies eine drehende Welle. Es sind aber auch andere Formen wie Gestänge, Hebel, Seil und Riemen möglich. Die Übertragungsvorrichtung kann auch ein ein- oder mehrstufiges Zahnradgetriebe umfassen, z.B. ein Kegelrad-, ein Stirnrad- und/oder ein Planetengetriebe. Der Motor und die Übertragungsvorrichtung bilden einen Antriebsstrang.

Der in den Antriebsstrang integrierte steuerbare Drehmomentübertrager ist eine Vorrichtung zur Steuerung der Drehmomentübertragung zwischen dem Motor und der Arbeitsmaschine. Dabei kann der Drehmomentübertrager die Drehmomentübertragung zwischen dem Motor und der Arbeitsmaschine entweder zulassen oder ganz oder teilweise unterbrechen. Die Steuerung des Drehmomentübertragers kann dabei in den Drehmomentübertrager selbst integriert sein oder durch ein Signal von außen bewirkt werden.

Der steuerbare Drehmomentübertrager kann selbsttätig schaltend sein, z.B. abhängig von der Wirkrichtung des Drehmoments. In diesem Fall wird die Funktion des Drehmomentübertragers durch einen Betriebsparameter wie Drehzahl, Drehmoment oder Drehrichtung gesteuert. Es ist auch möglich, dass der steuerbare Drehmomentübertrager fremdgeschaltet ist, z.B. durch einen elektromagnetischen Schalter, der von dem Betreiber der Anlage betätigt wird. Gemäß der Erfindung ist der Drehmomentübertrager zwischen der Strömungskupplung und der Arbeitsmaschine angeordnet. Gemäß der Erfindung weist die Übertragungsvorrichtung den mindestens einen steuerbaren Drehmomentübertrager zusätzlich zu der Strömungskupplung auf. Erfindungsgemäß wird durch einen lastfreien Betrieb der Strömungskupplung eine Kühlung der Strömungskupplung erreicht.

Der Drehmomentübertrager kann eine oder mehrere Kupplungen aus folgender Gruppe umfassen: Eine selbstgeschaltete Kupplung, insbesondere ein Freilauf, eine fremdgeschaltete Kupplung, insbesondere eine Lamellenkupplung oder eine Magnetkupplung.

Ein Freilauf ist so gestaltet, dass er ein für die Antriebsaufgabe der Arbeitsmaschine erforderliches Drehmoment überträgt, ein entgegen gerichtetes Drehmoment aber nicht. Ein Freilauf ist also in einer ersten Wirkrichtung Drehmoment übertragend und in einer zweiten, der ersten Wirkrichtung entgegen gesetzten Richtung nicht Drehmoment übertragend.

Die ein oder mehreren Drehmomentübertrager können als ein eigenständiges Bauteil der Übertragungsvorrichtung ausgebildet sein; es ist aber auch möglich, dass die ein oder mehreren Drehmomentübertrager zusammen mit einem anderen Bauteil der Übertragungsvorrichtung integriert ausgebildet sind, z.B. zusammen mit dem Getriebe oder der Strömungskupplung in ein gemeinsames Gehäuse integriert sind.

Gemäß der Erfindung umfasst das Verfahren folgende Schritte:
Unterbrechen der Drehmomentübertragung zwischen der Strömungskupplung und der Arbeitsmaschine;
Hochfahren des Motors, welcher in Bezug auf eine Drehmomentübertragung von der Arbeitsmaschine getrennt ist, auf eine vorgegebene Drehzahl;
Wiederherstellen der Drehmomentübertragung zwischen der Strömungskupplung und der Arbeitsmaschine; und
Antreiben der Arbeitsmaschine mittels einer Drehmomentübertragung von dem Motor über die Übertragungsvorrichtung auf die Antriebsmaschine.
Dabei kann die vorgegebene Drehzahl sowohl durch eine bauartbedingte Vorgabe, aber auch durch eine Vorgabe des Anlagen-Betreibers vorgegeben sein. Erfindungsgemäß besteht die Möglichkeit, die Strömungskupplung während des Stillstands der Mühle durch den Motor in Rotation zu versetzen und somit zu kühlen. Dies geschieht beispielsweise, falls ein als Freilauf ausgebildeter schaltbarer Drehmomentübertrager zwischen der Strömungskupplung und der Arbeitsmaschine angeordnet ist, indem der Motor rückwärts gestartet wird. Da die Strömungskupplung in diesem Fall keine Leistung auf die Arbeitsmaschine überträgt, ist der Schlupf fast Null und es die Wärmeerzeugung in der Strömungskupplung ist nicht nennenswert. Durch die Rotation jedoch "ventiliert" die Strömungskupplung und es findet eine große Wärmeabfuhr statt, sodass die Strömungskupplung schnell abkühlt und die Anlage wieder startbereit ist. Auf weitere Kühlmaßnahmen, wie z.B. externe Gebläse und andere Kühlvorrichtungen zum Abkühlen der Strömungskupplungen, kann somit verzichtet werden. Die Kühlung einer Strömungskupplung kann noch weiter verbessert werden, wenn außerdem folgender Schritt während und/oder nach dem Schritt "Hochfahren des Motors, welcher in Bezug auf eine Drehmomentübertragung von der Arbeitsmaschine getrennt ist, auf eine vorgegebene Drehzahl" durchgeführt wird: Antreiben, mittels des Motors, der Strömungskupplung ohne Last zur Kühlung der Strömungskupplung.
Außerdem kann durch ein vorübergehendes Unterbrechen der Drehmomentübertragung zwischen der Strömungskupplung und der Arbeitsmaschine ein Motor ohne die Last der Arbeitsmaschine hochgefahren werden. Erst nach Erreichen einer definierten Drehzahl des Motors wird die Drehmomentübertragung zwischen der Strömungskupplung und der Arbeitsmaschine wieder hergestellt, d.h. der Motor wird wieder an die Arbeitsmaschine angekoppelt. Gleichzeitig wird durch den lastfreien Betrieb der Strömungskupplung eine Kühlung der Strömungskupplung erreicht.

Die Erfindung kann beispielsweise vorteilhaft zum Einsatz kommen bei einem Mehrfachantrieb für Vertikalmühlen, wie sie in der Zementherstellung und Erz- und Kohleverarbeitung zum Einsatz kommen, wobei die Antriebsstränge des Mehrfachantriebs mit Strömungskupplungen ausgestattet sind. Dort sind die Anlagenbetreiber mit den Problemen konfrontiert, dass mehrere Motoren unter Last auf eine vorgegebene (Nenn-)Drehzahl gebracht werden müssen ("Hochfahren der Motoren") und dass erhitzte Strömungskupplungen schnell wieder abgekühlt werden müssen.

Durch eine vorübergehende Unterbrechung der Drehmomentübertragung zwischen der Strömungskupplung und der Arbeitsmaschine kann eine Strömungskupplung ohne Last durch den Motor betrieben werden; dies führt zu einem "Ventilieren" und somit einem schnelleren Abkühlen der Strömungskupplung als bei Stillstand der Strömungskupplung.

Durch eine vorübergehende Unterbrechung der Drehmomentübertragung zwischen der Strömungskupplung und der Arbeitsmaschine kann ein Motor ohne die Last der Arbeitsmaschine hochgefahren werden. Erst nach Erreichen einer definierten Drehzahl des Motors wird die Drehmomentübertragung zwischen der Strömungskupplung und der Arbeitsmaschine hergestellt, d.h. der Motor wird an die Arbeitsmaschine angekoppelt. Gleichzeitig wird durch den lastfreien Betrieb der Strömungskupplung eine Kühlung der Strömungskupplung erreicht.

Durch eine vorübergehende Unterbrechung der Drehmomentübertragung zwischen dem Motor und der Strömungskupplung kann ein Motor ohne die Last der Arbeitsmaschine hochgefahren werden.

Erst nach Erreichen einer definierten Drehzahl des Motors wird die Drehmomentübertragung zwischen dem Motor und der Strömungskupplung hergestellt, d.h. der Motor wird an die Arbeitsmaschine angekoppelt.

Vorteilhafte Ausgestaltungen und Weiterbildungen der Erfindung sind in den abhängigen Ansprüchen angegeben. Dabei kann das erfindungsgemäße Verfahren auch entsprechend den abhängigen Vorrichtungsansprüchen weitergebildet sein, und umgekehrt.

Gemäß einer bevorzugten Ausgestaltung der Erfindung umfasst der mindestens eine Drehmomentübertrager eine oder mehrere Kupplungen aus folgender Gruppe: eine selbstgeschaltete Kupplung, insbesondere ein Freilauf, eine fremdgeschaltete Kupplung, insbesondere eine Lamellenkupplung. Gemäß Dubbel, G 69, werden schaltbare Kupplungen eingesetzt, um Teile eines Antriebsstrangs wahlweise miteinander zu verbinden oder zu trennen (Literaturhinweis: Dubbel, Taschenbuch für den Maschinenbau, Herausgeber: K.-H. Grote und J. Feldhusen, 23. Auflage, Berlin Heidelberg: Springer-Verlag, 2011, ISBN 978-3-642-17305-9). Dabei erfolgt das Öffnen und Schließen des Drehmomentflusses bei den fremdgeschalteten Kupplungen auf ein externes Signal durch mechanische, hydraulische, pneumatische oder elektromagnetische Betätigung. Als eine besonders vorteilhafte selbsttätig schaltende Kupplung ist hier eine Lamellenkupplung zu nennen, die zu den kraft-(reib-)schlüssigen Schaltkupplungen zählt. Lamellenkupplungen sind vorteilhaft, weil sie durch Parallelschaltung mehrerer Reibflächen trotz ihrer relativ kleinen Außenabmessungen hohe Drehmomente übertragen können und relativ preisgünstig sind.

Gemäß Dubbel, G 73, werden als selbstgeschaltete Kupplungen, auch selbsttätig schaltende Kupplungen genannt, alle Kupplungen bezeichnet, deren Schaltvorgang durch einen der Betriebsparameter Drehzahl, Drehmoment oder Drehrichtung ausgelöst wird. Als eine besonders vorteilhafte selbsttätig schaltende Kupplung ist hier eine richtungsgeschaltete Kupplung zu nennen, auch Freilauf genannt. Freiläufe sind vorteilhaft, weil sie einfach aufgebaut und relativ preisgünstig sind.
Es ist auch möglich, dass als Drehmomentübertrager eine Kupplung zum Einsatz kommt, die funktional zwischen den selbstgeschalteten und den fremdgeschalteten Kupplungen anzusiedeln ist. Es kann z.B. ein hydraulisch unterstützter Freilauf eingesetzt werden, d.h. ein Freilauf, welcher eine hydraulische Unterstützung benötigt, um sicher zu schalten. In diesem Fall kann keine klare Trennlinie zwischen selbst- und fremdgeschaltet gezogen werden.
Prinzipiell kann der steuerbare Drehmomentübertrager durch eine Strömungskupplung mit veränderbarem Füllgrad, und somit veränderbarer Drehmomentübertragung, realisiert sein. Allerdings bedeutete dies einen relativ hohen Kostenaufwand, und der erforderliche Bauraum für zusätzliche Aggregate wäre groß. Daher ist es vorteilhafter, den steuerbaren Drehmomentübertrager als ein von der Strömungskupplung getrenntes Bauteil der Übertragungsvorrichtung bereitzustellen.

Gemäß einer bevorzugten Ausgestaltung der Erfindung sind ein erster Drehmomentübertrager zwischen dem Motor und der Strömungskupplung und ein zweiter Drehmomentübertrager zwischen der Strömungskupplung und der Arbeitsmaschine angeordnet. Dabei kann jeder dieser Drehmomentübertrager selbsttätig schaltend oder fremdgeschaltet sein. Eine bevorzugte Weiterbildung der Erfindung ist eine Arbeitsmaschine, insbesondere eine Vertikalmühle mit wenigstens einer Antriebsanordnung, wie oben beschrieben. Dabei kann die Arbeitsmaschine zwei oder mehr Antriebsanordnungen aufweisen, d.h. es kann sich um einen Mehrfachantrieb handeln. Der Mehrfachantrieb kann aktiv oder passiv redundant ausgelegt sein. Von Vorteil ist dabei, dass die zur Abkühlung der Strömungskupplung benötigten Produktionsunterbrechungen der Arbeitsmaschine gegenüber herkömmlichen Arbeitsmaschinen signifikant verkürzt sind.

Bei Vertikalmühlen mit Mehrfachantrieb, die in einer Festdrehzahl-Variante, d.h. ohne Frequenzumrichter, verwendet werden, bei welcher Strömungskupplungen mit konstanter Füllmenge zum Einsatz kommen, kann die vorliegende Erfindung besonders vorteilhaft genutzt werden. Die vorgesehenen Motoren, z.B. Käfigläufer-Asynchronmaschinen, können ohne zusätzliche strombegrenzende Funktionseinheiten nur nacheinander gestartet werden, da der Anlaufstrom sonst in der Regel zu hoch ist. Dadurch ist das zur Verfügung stehende Anfahrmoment bezogen auf das Nennmoment der Gesamtanlage gering, was einen verlangsamten Hochlauf der Gesamtanlage zur Folge hat. Dies führt bei erschwerten Anfahrsituationen durch die lang anhaltende Lastsituation zu starker Erhitzung der Strömungskupplungen, was die mögliche Dauer dieser Beanspruchung eines jeden einzelnen Triebstrangs einschränkt. Bei einer höheren Anzahl von Triebsträngen, z.B. vier oder mehr, kann es daher sein, dass erhitzte Triebstränge während des Hochlaufs schon wieder abgeschaltet werden müssen, um sie nicht zu überhitzen. Die Folge ist, dass das erreichte Gesamtantriebsmoment beschränkt bleibt, sowohl in seiner Höhe als auch zeitlich. Unter Umständen reicht das Antriebsmoment nicht aus, um die Anlage zu starten.

Dieses Problem kann durch die Verwendung eines schaltbaren Drehmomentübertragers, insbesondere einer Kupplung, z.B. einer Lamellenkupplung, zwischen dem Motor und der Strömungskupplung gelöst werden: Durch Auskuppeln des Motors, d.h. Unterbrechen der Drehmomentübertragung zwischen dem Motor und der Strömungskupplung, kann der Motor frei beschleunigen, ohne dass Leistung von der Strömungskupplung aufgenommen wird. Dadurch wird die Strömungskupplung nicht erhitzt. So können alle Motoren des Mehrfachantriebs sukzessive auf Leerlaufdrehzahl gebracht werden, ohne dass das Energienetz mit übermäßigen Stromstärken belastet wird. Sind alle Motoren des Mehrfachantriebs auf Drehzahl, können die Schaltkupplungen gleichzeitig oder gemäß einer vorgegebenen Schaltstrategie eingekuppelt werden. So erzeugen alle Triebstränge in einem optimalen Fall gleichzeitig das Antriebsmoment, wobei das Antriebsmoment in seiner Höhe nicht eingeschränkt und seine zeitliche Verfügbarkeit maximal ist.

Ein weiterer Vorteil ist, dass die Kennlinie der Strömungskupplungen bei dieser Variante auf das Anlaufverhalten des Motors keine Rücksicht nehmen muss. Sie kann nun Wirkungsgrad-optimal definiert werden, was den Gesamtwirkungsgrad des Antriebs verbessert und die Betriebstemperatur der Strömungskupplung absenkt. Ein weiterer Vorteil ist, dass auch die Motorkennlinien nicht auf ein hohes Anlaufmoment hin optimiert werden müssen, was die Motorkosten senkt und ebenfalls den Wirkungsgrad verbessert.

Im Folgenden wird die Erfindung anhand mehrerer Ausführungsbeispiele unter Zuhilfenahme der beiliegenden Zeichnung erläutert. Es zeigt jeweils schematisch und nicht maßstabsgetreu
- Fig. 1: einen Schnitt einer Antriebsanordnung zum Antreiben einer Vertikalmühle, bei welcher ein Drehmomentübertrager zwischen der Strömungskupplung und der Vertikalmühle angeordnet ist;
- Fig. 2: einen Schnitt einer Antriebsanordnung zum Antreiben einer Vertikalmühle, bei welcher ein Drehmomentübertrager zwischen dem Motor und der Strömungskupplung angeordnet ist; dieses Ausführungsbeispiel ist nicht Teil der Erfindung
- Fig. 3: einen Schnitt einer Antriebsanordnung zum Antreiben einer Vertikalmühle, bei welcher ein erster Drehmomentübertrager zwischen dem Motor und der Strömungskupplung und ein zweiter Drehmomentübertrager zwischen der Strömungskupplung und der Vertikalmühle angeordnet ist;
- Fig. 4: eine Draufsicht auf eine Vertikalmühle mit vier Antriebsanordnungen; und
- Fig. 5: Abkühlkurven einer stillstehenden und einer rotierenden Strömungskupplung.

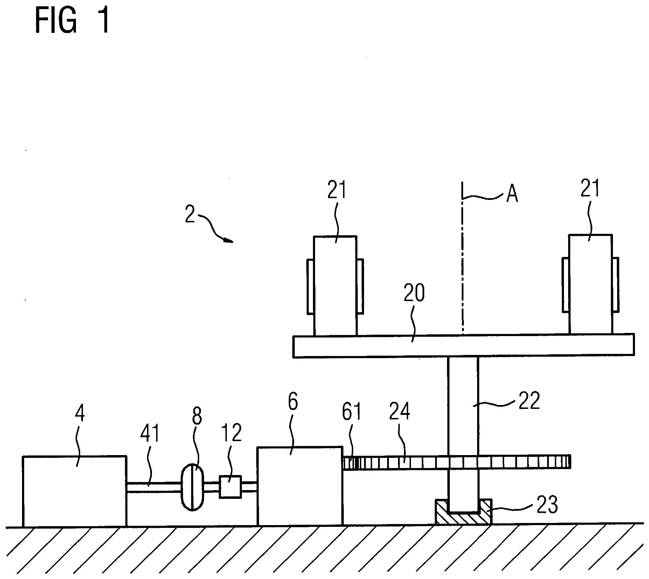

Fig. 1 zeigt einen Schnitt einer Antriebsanordnung zum Antreiben einer Vertikalmühle 2, bei welcher ein Drehmomentübertrager 12 zwischen der Strömungskupplung 8 und der Vertikalmühle 2 angeordnet ist.
Eine als Arbeitsmaschine fungierende Vertikalmühle 2 mit einem um eine vertikale Drehachse A weist einen rotierbaren Mahlteller 20 auf. Auf der Oberseite des Mahltellers 20 ist eine Mahlbahn ausgebildet, auf der eine oder mehrere Mahlwalzen 21 abrollen. Der Mahlteller ist an einem vertikal oberen Ende einer in einem Axiallager 23 gelagerten Antriebswelle 22, welche entlang der Drehachse A verläuft, drehfest angeordnet. Ein horizontal angeordneter Zahnkranz 24 ist unterhalb des Mahltellers 20 drehfest an der Welle 22 angeordnet.

Zum Antreiben der Antriebswelle 22 dient eine Antriebsanordnung, umfassend einen Motor 4, ein Getriebe 6 und eine den Motor 4 und das Getriebe 6 verbindende Welle 41. Die Welle 41 umfasst einen ersten Teil, nämlich eine Abtriebswelle des Motors 4, und einen zweiten Teil, eine Antriebswelle des Getriebes 6. Beide Teile sind durch eine Strömungskupplung 8 gekoppelt. Der Motor 4 treibt über die Strömungskupplung 8 ein abtriebsseitiges Ritzel 61 des Getriebes 6 an, welches mit dem Zahnkranz 24 kämmt.

Zwischen der Strömungskupplung 8 und dem Getriebe 6 ist ein Drehmomentübertrager 12 angeordnet; dabei kann es sich um eine selbsttätig schaltende Kupplung, z.B. einen Freilauf, gegebenenfalls mit hydraulischer Unterstützung, oder eine fremdgeschaltete Kupplung, z.B. eine elektromagnetisch oder hydraulisch geschaltete Lamellenkupplung, handeln.

Während des Mühlenbetriebs wird das Drehmoment des Motors 4 über die Welle 41, die Strömungskupplung 8, den Freilauf 12 und das Getriebe 6 auf das Ritzel 61 und den Zahnkranz 24 übertragen. Eine Rotation des Motors 4 führt also zu einer Drehung des Mahltellers 20 in der Arbeitsrichtung der Mühle 2. Da die Strömungskupplung 8 in diesem Fall die Motorleistung auf das Getriebe 6 überträgt, wird aufgrund des Schlupfs der Strömungskupplung 8 Wärme in der Strömungskupplung 8 erzeugt.

Wird nun der Betrieb der Mühle 2 vorübergehend angehalten, so kann in dieser Arbeitspause des Antriebs die Strömungskupplung 8 abgekühlt werden, indem die Drehmomentübertragung zwischen der Strömungskupplung 8 und der Mühle 2 vorübergehend unterbrochen und die Strömungskupplung 8 durch den Motor im Leerlauf rotiert wird.

Da die Strömungskupplung 8 aufgrund des Freilaufs 12 in diesem Fall keine Leistung auf das Getriebe 6 überträgt, ist der Schlupf der Strömungskupplung 8 fast Null, und es findet keine nennenswerte Wärmeerzeugung in der Strömungskupplung 8 statt. Durch die Rotation jedoch "ventiliert" die Strömungskupplung 8, und es findet eine große Wärmeabfuhr von der Strömungskupplung 8 statt, so dass die Strömungskupplung 8 wesentlich schneller abkühlt als bei Stillstand; in Folge dessen ist der Antrieb relativ schnell wieder startbereit.

Im Fall des Freilaufs kann der Motor 4 entgegen der Arbeitsdrehrichtung, d.h. rückwärts, betrieben werden. Im Fall der gelösten Lamellenkupplung kann der der Motor 4 in jeder Richtung, vorwärts oder rückwärts, betrieben werden.

Auch im Fall, dass die Mühle aus dem Stillstand hochgefahren werden muss, ist der schaltbare Drehmomentübertrager 12 von Vorteil. Indem die Drehmomentübertragung zwischen der Strömungskupplung 8 und der Mühle 2 vorübergehend unterbrochen wird, kann der Motor ohne Last auf eine vorgegebene Drehzahl gebracht werden. Erst nach Erreichen einer definierten Drehzahl des Motors wird die Drehmomentübertragung zwischen der Strömungskupplung und der Arbeitsmaschine wieder hergestellt, d.h. der Motor wird wieder an die Arbeitsmaschine angekoppelt.

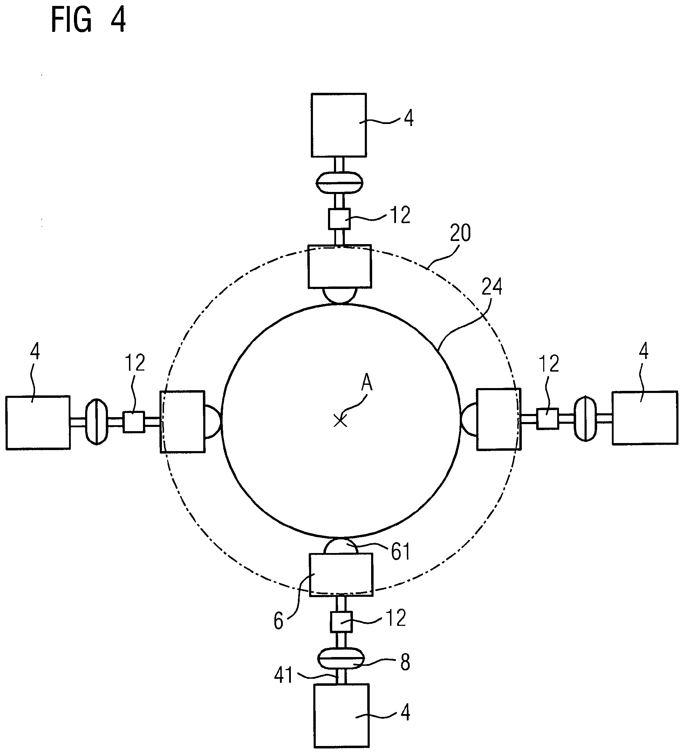

Dies ist insbesondere wichtig, falls die Mühle mehrere Antriebe aufweist, wie in dem in Fig. 4 gezeigten Ausführungsbeispiel dargestellt. Die Draufsicht auf die Vertikalmühle zeigt vier gleichmäßig um die Mühlenachse A angeordnete Antriebsanordnungen an den Positionen 0, 90, 180 und 270 Grad, jeweils umfassend einen Elektromotor 4, eine Welle 41, eine Strömungskupplung 8, einen schaltbaren Drehmomentübertrager 12 und ein Getriebe 6 mit einem abtriebsseitigen Ritzel 61. Die Abtriebsritzel 61 der Antriebsanordnungen kämmen alle mit einem gemeinsamen Zahnkranz 24, welcher mit einem Mahlteller 20 drehfest verbunden ist.

In diesem Fall können die Motoren 4 in der Regel nicht gleichzeitig hochgefahren werden, weil dies zu einer Überlastung des Stromnetzes führen würde. So können alle Motoren 4 des Mehrfachantriebs sukzessive auf Leerlaufdrehzahl gebracht werden, ohne dass das Energienetz mit übermäßigen Stromstärken belastet wird. Sind alle Motoren 4 des Mehrfachantriebs auf Drehzahl, können die Schaltkupplungen 12 gleichzeitig oder gemäß einer vorgegebenen Schaltstrategie eingekuppelt werden. So erzeugen alle Triebstränge in einem optimalen Fall gleichzeitig das Antriebsmoment und es ist in seiner Höhe nicht eingeschränkt und die zeitliche Verfügbarkeit ist maximal.

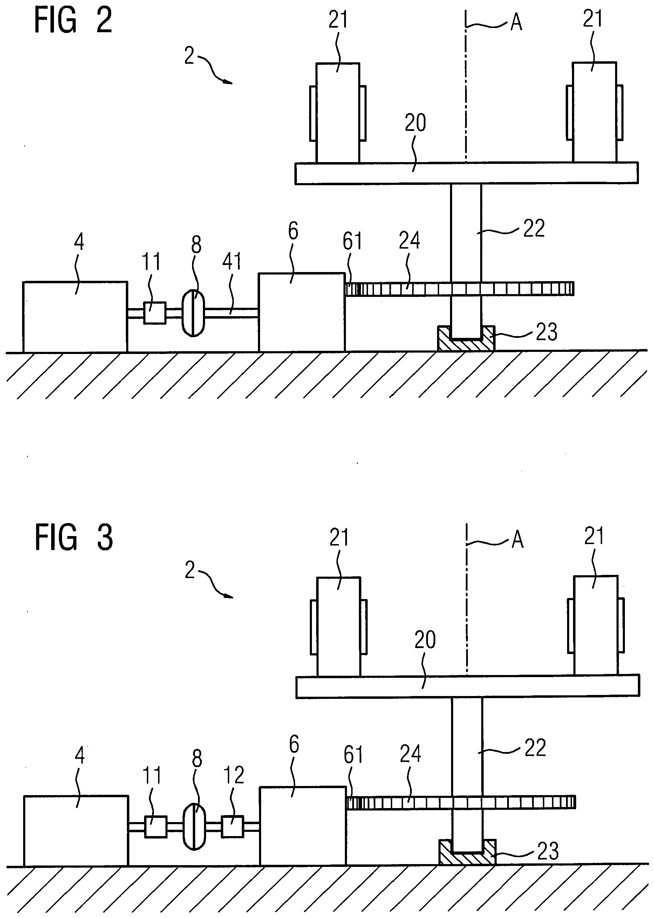

Fig. 2 zeigt einen Schnitt einer Antriebsanordnung zum Antreiben einer Vertikalmühle, bei welcher ein Drehmomentübertrager 11 zwischen dem Motor 4 und der Strömungskupplung 8 angeordnet ist. Außer dem Unterschied, dass bei dem Ausführungsbeispiel von Fig. 2 der Drehmomentübertrager 11 zwischen dem Motor 4 und der Strömungskupplung 8 angeordnet ist, und nicht wie bei dem Ausführungsbeispiel von Fig. 1, zwischen der Strömungskupplung und der Vertikalmühle, entspricht das Ausführungsbeispiel von Fig. 2 dem von Fig. 1.

Wird mittels des schaltbaren Drehmomentübertragers 11 eine vorübergehende Unterbrechung der Drehmomentübertragung zwischen dem Motor 4 und der Strömungskupplung 8 bewirkt, kann der Motor 4 ohne die Last der Arbeitsmaschine 2 hochgefahren werden. Erst nach Erreichen einer definierten Drehzahl des Motors 4 wird die Drehmomentübertragung zwischen dem Motor 4 und der Strömungskupplung 8 wieder hergestellt, d.h. der Motor 4 wird wieder an die Arbeitsmaschine 2 angekoppelt.

Dies ist insbesondere wichtig, falls die Mühle mehrere Antriebe aufweist, welche nicht gleichzeitig hochgefahren werden können, weil dies zu einer Überlastung des Stromnetzes führen würde. So können alle Motoren des Mehrfachantriebs sukzessive auf Leerlaufdrehzahl gebracht werden, ohne dass das Energienetz mit übermäßigen Stromstärken belastet wird. Sind alle Motoren des Mehrfachantriebs auf Drehzahl, können die Schaltkupplungen gleichzeitig oder gemäß einer vorgegebenen Schaltstrategie eingekuppelt werden. So erzeugen alle Triebstränge in einem optimalen Fall gleichzeitig das Antriebsmoment, dessen Höhe nicht eingeschränkt und dessen zeitliche Verfügbarkeit maximal ist.

Fig. 3 zeigt einen Schnitt einer Antriebsanordnung zum Antreiben einer Vertikalmühle, bei welcher ein erster Drehmomentübertrager 11 zwischen dem Motor 4 und der Strömungskupplung 8 und ein zweiter Drehmomentübertrager 11 zwischen der Strömungskupplung 8 und der Vertikalmühle 2 angeordnet ist. Auf diese Weise hat der Betreiber der Vertikalmühle 2 die völlige Freiheit, in welcher Weise er die Drehmomentübertragung ausführen möchte, um die oben beschriebenen vorteilhaften technischen Wirkungen zu erzielen.

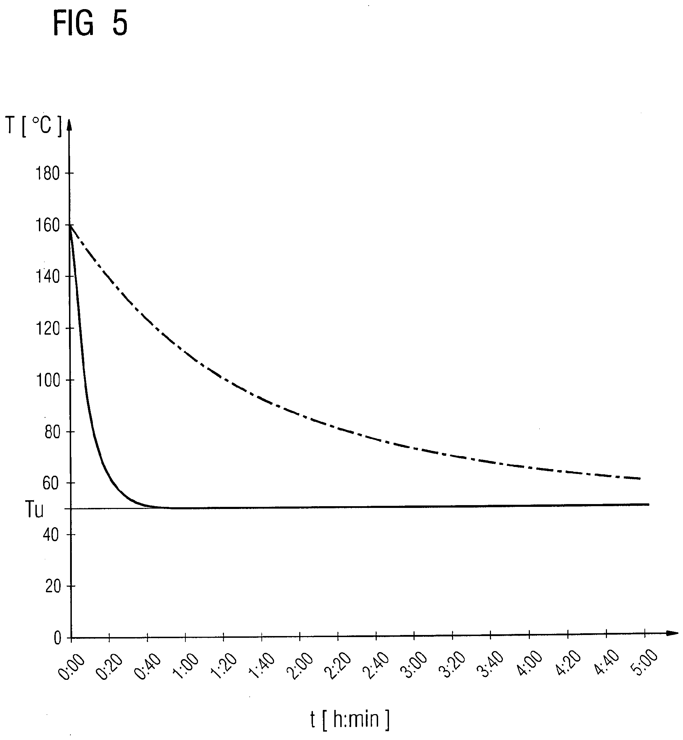

Fig. 5 ist ein Zeit-Temperatur-Diagramm mit Abkühlkurven einer stillstehenden Strömungskupplung und einer rotierenden Strömungskupplung, welches den durch die Erfindung erzielbaren zeitlichen Vorteil verdeutlicht. Auf der horizontalen Achse ist nach rechts die Zeit t in der Einheit Stunden h und Minuten min von 0 bis 5 Stunden aufgetragen. Auf der vertikalen Achse ist nach oben die Temperatur in der Einheit Grad Celsius von 0 bis 180 °C aufgetragen. Ausgangspunkt beider Kurven ist eine auf 160 °C erhitzte Strömungskupplung.

Die Strichpunkt-Kurve ist die Abkühlkurve der stillstehenden Strömungskupplung. Die stillstehenden Strömungskupplung kühlt relativ langsam ab und hat selbst nach fünf Stunden Abkühlzeit noch nicht die Umgebungstemperatur Tu von 50 °C erreicht.

Die durchgezogene Kurve ist die Abkühlkurve der rotierenden Strömungskupplung. Durch eine vorübergehende Unterbrechung der Drehmomentübertragung zwischen der Strömungskupplung und der Arbeitsmaschine kann die Strömungskupplung ohne Last durch den Motor betrieben, d.h. rotiert, werden; dies führt zu einem kühlenden "Ventilieren" der Strömungskupplung. Die lastfrei rotierende Strömungskupplung kühlt erheblich schneller ab als die stillstehende Strömungskupplung und hat nach ca. 50 Minuten Abkühlzeit die Umgebungstemperatur Tu von 50 °C erreicht.

## Patentansprüche

1. Verfahren zum Betreiben einer Antriebsanordnung zum Antreiben einer Arbeitsmaschine (2), umfassend einen Motor (4) zum Erzeugen eines Drehmoments und eine Übertragungsvorrichtung (41) zum Übertragen des Drehmoments von dem Motor (4) zu der Arbeitsmaschine (2), wobei die Übertragungsvorrichtung (41) eine Strömungskupplung (8) aufweist, wobei die Übertragungsvorrichtung (41) mindestens einen steuerbaren Drehmomentübertrager (11, 12) zur Steuerung der Drehmomentübertragung vom Motor (4) zu der Arbeitsmaschine (2) aufweist, wobei die Übertragungsvorrichtung (41) den mindestens einen steuerbaren Drehmomentübertrager (11, 12) zusätzlich zu der Strömungskupplung (8) aufweist, wobei ein schaltbarer Drehmomentübertrager (12) zwischen der Strömungskupplung (8) und der Arbeitsmaschine (2) angeordnet ist, mit folgenden Schritten:
a) Unterbrechen der Drehmomentübertragung zwischen der Strömungskupplung (8) und der Arbeitsmaschine (2);
b) Hochfahren des Motors (4), welcher in Bezug auf eine Drehmomentübertragung von der Arbeitsmaschine (2) getrennt ist, auf eine vorgegebene Drehzahl;
c) Wiederherstellen der Drehmomentübertragung zwischen der Strömungskupplung (8) und der Arbeitsmaschine (2); und
d) Antreiben der Arbeitsmaschine (2) mittels einer Drehmomentübertragung von dem Motor (4) über die Übertragungsvorrichtung (41) auf die Antriebsmaschine (2),
**dadurch gekennzeichnet, dass** das Verfahren den folgenden weiteren Schritt während und/oder nach dem Schritt b) umfasst:
Antreiben, mittels des Motors (4), der Strömungskupplung (8) ohne Last zur Kühlung der Strömungskupplung (8).

2. Verfahren nach Anspruch 1, wobei der mindestens eine Drehmomentübertrager (11, 12) eine oder mehrere Kupplungen aus folgender Gruppe umfasst: eine selbstgeschaltete Kupplung, insbesondere ein Freilauf, eine fremdgeschaltete Kupplung, insbesondere eine Lamellenkupplung.

3. Verfahren nach Anspruch 1 oder 2, wobei ein schaltbarer Drehmomentübertrager (11) zwischen dem Motor und der Strömungskupplung (8) angeordnet ist.

4. Arbeitsmaschine, insbesondere Vertikalmühle (2), mit einer Antriebsanordnung zum Antreiben der Arbeitsmaschine (2), umfassend einen Motor (4) zum Erzeugen eines Drehmoments und eine Übertragungsvorrichtung (41) zum Übertragen des Drehmoments von dem Motor (4) zu der Arbeitsmaschine (2), wobei die Übertragungsvorrichtung (41) eine Strömungskupplung (8) aufweist, wobei die Übertragungsvorrichtung (41) mindestens einen steuerbaren Drehmomentübertrager (11, 12) zur Steuerung der Drehmomentübertragung vom Motor (4) zu der Arbeitsmaschine (2) aufweist, wobei die Übertragungsvorrichtung (41) den mindestens einen steuerbaren Drehmomentübertrager (11, 12) zusätzlich zu der Strömungskupplung (8) aufweist, wobei ein schaltbarer Drehmomentübertrager (12) zwischen der Strömungskupplung (8) und der Arbeitsmaschine (2) angeordnet ist, mit einer Steuerung des mindestens einen steuerbaren Drehmomentübertragers zum Betreiben der Arbeitsmaschine gemäß einem Verfahren nach einem der vorhergehenden Ansprüche.

5. Arbeitsmaschine, insbesondere Vertikalmühle (2), nach Anspruch 4 mit zwei oder mehr Antriebsanordnungen.

## Claims

1. Method for operating a drive arrangement for driving a work machine (2), comprising a motor (4) for generating a torque and a transmission apparatus (41) for transmitting the torque from the motor (4) to the work machine (2), wherein the transmission apparatus (41) has a fluid coupling (8), wherein the transmission apparatus (41) has at least one controllable torque transmitter (11, 12) for controlling the torque transmission from the motor (4) to the work machine (2), wherein the transmission apparatus (41) has the at least one controllable torque transmitter (11, 12) in addition to the fluid coupling (8), wherein a switchable torque transmitter (12) is arranged between the fluid coupling (8) and the work machine (2), having the following steps:
a) interrupting the torque transmission between the fluid coupling (8) and the work machine (2);
b) starting up the motor (4), which is separated from the work machine (2) in respect of a torque transmission, to a predetermined speed;
c) re-establishing the torque transmission between the fluid coupling (8) and the work machine (2); and
d) driving the work machine (2) by means of a torque transmission from the motor (4) via the transmission apparatus (41) to the drive machine (2),
**characterised in that** the method comprises the following further step during and/or after step b):
driving, using the motor (4), the fluid coupling (8) without load for cooling the fluid coupling (8).

2. Method according to claim 1, wherein the at least one torque transmitter (11, 12) comprises one or more couplings from the following group: an autoswitched coupling, in particular a free-wheel, an externally-switched coupling, in particular a multiple-disc coupling.

3. Method according to claim 1 or 2, wherein a switchable torque transmitter (11) is arranged between the motor and the fluid coupling (8).

4. Work machine, in particular vertical mill (2), with a drive arrangement for driving the work machine (2), comprising a motor (4) for generating a torque and a transmission apparatus (41) for transmitting the torque from the motor (4) to the work machine (2), wherein the transmission apparatus (41) has a fluid coupling (8), wherein the transmission apparatus (41) has at least one controllable torque transmitter (11, 12) for controlling the torque transmission from the motor (4) to the work machine (2), wherein the transmission apparatus (41) has the at least one controllable torque transmitter (11, 12) in addition to the fluid coupling (8), wherein a switchable torque transmitter (12) is arranged between the fluid coupling (8) and the work machine (2), with a controller of the at least one controllable torque transmitter for operating the work machine according to a method according to one of the preceding claims.

5. Work machine, in particular vertical mill (2), according to claim 4 with two or more drive arrangements.

## Revendications

1. Procédé pour faire fonctionner un dispositif d'entraînement pour entraîner un engin (2) de chantier, comprenant un moteur (4) de production d'un couple et un dispositif (41) de transmission pour transmettre le couple du moteur (2) à l'engin (2) de chantier, le dispositif (41) de transmission ayant un accouplement (8) hydraulique, le dispositif (41) de transmission ayant un transmetteur (11, 12) de couple pouvant être commandé, pour commander la transmission de couple du moteur (4) à l'engin (2) de chantier, le dispositif (41) de transmission ayant, supplémentairement à l'accouplement (8) hydraulique, au moins un transmetteur (11, 12) de couple pouvant être commandé, dans lequel un transmetteur (12) de couple embrayable peut être disposé entre l'accouplement (8) hydraulique et l'engin de chantier, comprenant les stades suivants :
a) interruption de la transmission de couple entre l'accouplement (8) hydraulique et l'engin (2) de chantier;
b) montée en puissance du moteur (4), qui, en ce qui concerne une transmission de couple, est séparé de l'engin (2) de chantier jusqu'à une vitesse de rotation donnée à l'avance;
c) rétablissement de la transmission de couple entre l'accouplement (8) hydraulique et l'engin (2) de chantier et
d) entraînement de l'engin (2) de chantier au moyen d'une transmission de couple du moteur (4) à l'engin (2) de chantier par le dispositif (41) de transmission,
**caractérisé en ce que** le procédé comprend l'autre stade suivant pendant et/ou après le stade b) :
entraînement, au moyen du moteur (4), de l'accouplement (8) hydraulique sans charge pour le refroidissement de l'accouplement (8) hydraulique.

2. Procédé suivant la revendication 1, dans lequel le au moins un transmetteur (11, 12) de couple comprend un ou plusieurs accouplements du groupe suivant : un accouplement automatique, notamment une roue libre, un accouplement à actionnement de l'extérieur, notamment un embrayage à disque.

3. Procédé suivant la revendication 1 ou 2, dans lequel un transmetteur (11) de couple embrayable peut être disposé entre le moteur et l'accouplement (8) hydraulique.

4. Engin de chantier, notamment broyeur (2) vertical, comprenant un dispositif d'entraînement pour entraîner l'engin (2) de chantier, comportant un moteur (2) de production d'un couple et un dispositif (41) de transmission, pour transmettre le couple du moteur (4) à l'engin (2) de chantier, le dispositif (41) de transmission ayant un accouplement (8) hydraulique, le dispositif (41) de transmission ayant au moins un transmetteur (11, 12) de couple pouvant être commandé, pour commander la transmission de couple du moteur à l'engin (2) de chantier, le dispositif (41) de transmission ayant, supplémentairement à l'accouplement (8) hydraulique, le au moins un transmetteur (11, 12) de couple pouvant être commandé, un transmetteur (12) de couple embrayable étant disposé entre l'accouplement (8) hydraulique et l'engin (2) de chantier, comprenant une commande du au moins un transmetteur de couple pouvant être commandé pour faire fonctionner l'engin de chantier suivant un procédé selon l'une des revendications précédentes.

5. Engin de chantier, notamment broyeur (2) vertical suivant la revendication (4), ayant deux ou plusieurs dispositifs d'entraînement.
